# EUROPEAN PATENT APPLICATION

(11) **EP 3 520 628 A1**
(43) Date of publication of application: **07.08.2019**
(21) Application number: 18154605.2
(22) Date of filing: 01.02.2018
(51) Int. Cl.: A23L 7/10, A23L 19/10

(54) **DRIED INGREDIENTS FOR MAKING A SUBSTITUTE FOR SUSHI RICE AND METHOD FOR MAKING A SUBSTITUTE FOR SUSHI RICE FROM DRIED INGREDIENTS**

(71) Applicant: Wadakyu Europe, S.L., 36475 Porrino (Pontevedra) (ES)
(72) Inventor: WADA, SACHIYUKI, 36475 PORRIÑO (Pontevedra) (ES)
(74) Representative: Díaz de Bustamante y Terminel, Isidro

(57) **Abstract**

The invention discloses ingredients and a method for making a substitute for sushi rice, where the ingredients comprise: dried Konnyaku rice comprising tapioca starch, Konjac powder, shellfish powder, and calcium, in the form of rice grains; and a dried seasoning powder comprising about 17% rice powder, about 35% rice vinegar powder, about 1.7% Kombu powder, about 39% sugar powder, about 6.3% salt powder, and about 1% Katsuobushi powder, and the method for making the substitute for sushi rice comprises: boiling 1 part of Konnyaku rice in 3.5 parts of water; and adding 0.25 parts of seasoning powder and mixing well.

## Description

### OBJECT OF THE INVENTION

A first object of the invention is a set of dried ingredients for making a substitute for sushi rice comprising dried Konnyaku rice and a dried seasoning powder.

A second object of the invention is a method for obtaining the substitute for sushi rice using the above ingredients.

### PRIOR ART

Japanese food, and specially sushi, a term encompassing a variety of rice-based dishes, has become very popular over the last decade. Further, while years ago people ate sushi mostly in restaurants and bars, making sushi at home is becoming more and more frequent. However, a critical step for making good sushi relates to the preparation of sushi rice.

Traditionally, the preparation of sushi rice requires carrying out the following steps:
- Washing the rice with running water until there is no more starch coming out of it.
- Cooking the rice with about 20% more water than rice.
- Adding rice vinegar, sugar and salt to the rice and mixing thoroughly.
- Letting the rice cool down.

While this recipe seems easy to follow, people lacking experience in making sushi rice frequently have trouble in obtaining good sushi rice. Great care must be taken while carrying out each of the above steps, and a number of known additional precautions not explicitly disclosed in the present application must be taken into account during the process.

Further, irrespective of the culinary quality of the resulting sushi rice, rice is generally known to be a high calorie foodstuff due to its high content in carbohydrates. Particularly, a portion of sushi rice contains about 33 g of carbohydrates and 140 calories. It is therefore not suitable for people desiring to limit their calorie intake.

Accordingly, a need exists in the art for a low calorie sushi rice, more particularly for a low calorie sushi rice easier to make by people lacking cooking experience.

### DESCRIPTION OF THE INVENTION

The present invention solves the aforementioned drawbacks by providing a set of ingredients and a method for making an easy-to-make, low-calorie substitute for sushi rice.

In the present invention, the term "*substitute for sushi rice"* makes reference to a foodstuff made of granules having a size and shape similar to that of rice, said foodstuff having a taste and texture that closely resembles the taste and texture of sushi rice.

In the present invention, the term "*about*" in connection with a numerical value means that said numerical value can vary slightly, for example 10% or the like.

A first aspect of the invention is directed to dried ingredients for making a substitute for sushi rice comprising dried Konnyaku rice and dried seasoning powder. These ingredients are disclosed in more detail below:
a) Dried Konnyaku rice
   Dried Konnyaku rice comprises Konjac flour or powder in the form of rice grains.
   Konjac is a plant native to warm subtropical to tropical eastern Asia, from Japan and China south to Indonesia. Foodstuffs made from the corm of this plant are widely known, cooked and consumed in Japan.
   The dried corm of the konjac plant contains around 40% glucomannan gum. This polysaccharide makes konjac jelly highly viscous and may be responsible for many of its putative health benefits as used in traditional Chinese medicine, detoxification, tumour-suppression, blood stasis alleviation and phlegm liquefaction.
   Konjac has almost no calories, but is very high in fiber. Thus, it is often used as a diet food. The Omikenshi Company has developed a process which mixes treated wood pulp with konjac; the resulting fiber-rich flour contains neither gluten nor fat, and almost no carbohydrates, and has just 60 calories a kilogram vis-à-vis 3680 for wheat
   The dietary fiber from the corm of Amorphophallus konjac is used as a component of weight loss supplements. Konjac supplementation at modest levels has been shown to promote increased butyric acid through improved bowel flora ecology and increase bowel movements in constipated adults.
   The Konnyaku rice of the present invention is based primarily on Konjac powder or flour, compacted at high pressure for providing granules having a size and shape similar to that of rice. The use of Konnyaku rice is particularly advantageous because of its low calorie-content. Further, the high viscosity of the Konnyaku rice grains is particularly advantageous in this context in that it promotes the resulting substitute for sushi rice being sticky, as a traditional sushi rice should be.
   The Konnyaku rice may further comprise additives selected according to the desired taste and calorie-content of the resulting substitute for sushi rice. In a preferred embodiment of the invention, the Konnyaku rice comprises, in addition to Konjac powder, additives such as tapioca starch, shellfish powder, and calcium powder.
b) Dried seasoning powder
   The dried seasoning powder comprises rice powder, rice vinegar powder, sugar powder, and salt powder.
   In this respect, note that the traditional sushi rice recipe discloses mixing the boiled rice with rice vinegar, sugar and salt. Therefore, in the traditional recipe, the addition of vinegar, sugar, and salt to the boiled rice are disclosed. However, the addition of a further content of rice, particularly the addition of a further content of rice in powder form, is neither disclosed nor suggested in any document of the prior art. The addition of rice powder in the present method is critical because if affects the viscosity of the resultant substitute for sushi rice. A proper selection of the proportion of rice in powder form in the dried seasoning powder thus ensures that the texture of the resultant substitute for sushi rice closely resembles that of traditionally made sushi rice.
   Preferably, the content of rice powder in the dried seasoning powder is between 15% and 20% of the dried seasoning powder, where the dried ingredients comprise 0,25 parts of dried seasoning powder per 1 part of Konnyaku rice.
   More preferably, the content of rice powder in the dried seasoning powder is essentially 17% of the dried seasoning powder, where the dried ingredients comprise 0,25 parts of dried seasoning powder per 1 part of Konnyaku rice.
   In a further preferred embodiment of the invention, the dried seasoning powder may further comprise Kombu powder and/or Katsuobushi powder. These additives further add pleasant flavor characteristics to the resulting substitute for sushi rice.
   Even more preferably, the dried seasoning powder comprises: about 17% rice powder, about 35% rice vinegar powder, about 1.7% Kombu powder, about 39% sugar powder, about 6.3% salt powder, and about 1% Katsuobushi powder, where the dried ingredients comprise 0,25 parts of dried seasoning powder per 1 part of Konnyaku rice.

The above combination of ingredients, when combined appropriately according to the method disclosed herein, render a substitute for sushi rice having a texture and taste very closely resembling the texture and taste of sushi rice. Note that, in contrast to the ingredients used in the prior art, all the ingredients disclosed herein are provided in dried powder form. This is further advantageous for several reasons, such as a longer shelf life of the ingredients, a reduced volume of the ingredients during storage, and an easier and more convenient handling of the ingredients.

A second aspect of the present invention is directed to a method for making a substitute for sushi rice from dried ingredients. The dried ingredients comprise dried Konnyaku rice and seasoning powder. The dried Konnyaku rice comprises tapioca starch, Konjac powder, shellfish powder, and calcium powder, having the form of rice grains. The dried seasoning powder comprises about 17% rice powder, about 35% vinegar powder, about 1.7% Kombu powder, about 39% sugar powder, about 6.3% salt powder, and about 1% Katsuobushi powder. The method comprises the following steps:
- boiling 1 part of Konnyaku rice in 3.5 parts of water; and
- adding 0.25 parts of seasoning powder and mixing well.

Note that this method is much simpler than the traditional method for cooking sushi rice. The user needs only to boil the Konnyaku rice in water and then adding and mixing the seasoning powder. This method allows people with little or no experience in cooking sushi rice to obtain a substitute for sushi rice with a very low calorie content in comparison with sushi rice but, at the same time, having a taste and texture closely resembling that of sushi rice.

### PREFERRED EMBODIMENT OF THE INVENTION

A preferred embodiment of the invention is disclosed below.

Firstly, the dried Konjac rice and the seasoning powder are produced.

In this example, the dried Konjac rice is produced by compacting at high pressure a mix of Konjac powder, tapioca starch, shellfish powder and calcium powder, in order to render a plurality of granules. The resulting material is sieved for ensuring a correct size of the granules, i.e. a size similar to the size of rice grains. The dried Konjac rice produced is then packed in individual 100 gram packages. 100 grams of dried Konjac rice render about 400 grams of substitute for sushi rice.

The seasoning powder is made by mixing, in a container of about 100 liter volume, 17 kg of rice powder, 35 kg of rice vinegar powder, 1.7 kg of Kombu powder, 39 kg of sugar powder, 6.3 kg of salt powder, and 1 kg of katsuobushi powder. This mix is then grinded until a homogeneous powder is obtained. The seasoning powder produced is then packed in individual 25 gram packages.

Now, a plurality of individual ready-to-use packagings are made by introducing one 100 gram package of dried Konjac rice and one 25 gram package of seasoning powder in each of the individual ready-to-use packagings.

A user buying an individual ready-to-use packaging can then make 400 grams of substitute for sushi rice using only the ingredients included in the packaging. The user introduces the 100 grams of dried Konjac rice of an individual package in a pan. The user then adds 0.35 liters of cold water, places the lid on the pan, and heats. Once the water starts boiling, the user turns the heat down for vapor-cooking the rice for 15 minutes. Finally, the user lifts the lid and adds the seasoning powder contained in the corresponding individual 25 gram package.

## Claims

1. Dried ingredients for making a substitute for sushi rice, **characterized by** comprising:
- dried Konnyaku rice comprising Konnyaku powder in the form of rice grains; and
- dried seasoning powder comprising rice powder, rice vinegar powder, sugar powder, and salt powder.

2. Dried ingredients for making substitute for sushi rice according to claim 1, where the content of rice powder in the dried seasoning powder is between 15% and 20% of the dried seasoning powder, where the dried ingredients comprise 0,25 parts of dried seasoning powder per 1 part of Konnyaku rice.

3. Dried ingredients for making substitute for sushi rice according to claim 2, where the content of rice powder in the dried seasoning powder is essentially 17% of the dried seasoning powder, where the dried ingredients comprise 0,25 parts of dried seasoning powder per 1 part of Konnyaku rice.

4. Dried ingredients for making substitute for sushi rice according to any of the previous claims, where the dried seasoning powder further comprises Kombu powder.

5. Dried ingredients for making substitute for sushi rice according to any of the previous claims, where the dried seasoning powder further comprises Katsuobushi powder.

6. Dried ingredients for making substitute for sushi rice according to any of the previous claims, where the dried seasoning powder comprises: about 17% rice powder, about 35% rice vinegar powder, about 1.7% Kombu powder, about 39% sugar powder, about 6.3% salt powder, and about 1% Katsuobushi powder, where the dried ingredients comprise 0,25 parts of dried seasoning powder per 1 part of Konnyaku rice.

7. Dried ingredients for making substitute for sushi rice according to any of the previous claims, where the dried Konnyaku rice comprises: Konjac powder, tapioca starch, shellfish powder, and calcium.

8. Method for making substitute for sushi rice from dried ingredients, where the dried ingredients comprise: dried Konnyaku rice comprising tapioca starch, Konjac powder, shellfish powder, and calcium, in the form of rice grains; and a seasoning powder comprising about 17% rice powder, about 35% rice vinegar powder, about 1.7% Kombu powder, about 39% sugar powder, about 6.3% salt powder, and about 1% Katsuobushi powder,
**characterized by** comprising the following steps:
- boiling 1 part of Konnyaku rice in 3.5 parts of water; and
- adding 0.25 parts of seasoning powder and mixing well.
